# EUROPEAN PATENT APPLICATION

(11) **EP 1 522 757 A1**
(43) Date of publication of application: **13.04.2005**
(21) Application number: 02749301.4
(22) Date of filing: 17.07.2002
(51) Int. Cl.: F16D 65/34, F16D 65/18, F16D 49/16, H01F 7/16

(54) **ELECTROMAGNETIC BRAKE**

(71) Applicant: MITSUBISHI DENKI KABUSHIKI KAISHA, Tokyo 100-8310 (JP)
(72) Inventor: KOMATSU, Takanori, Mitsubishi Denki K.K., Chiyoda-ku, Tokyo 100-8310 (JP); DAIKOKU, Akihiro, Mitsubishi Denki K.K., Chiyoda-ku, Tokyo 100-8310 (JP)
(74) Representative: HOFFMANN - EITLE
(86) International application number: PCT/JP2002/007245
(87) International publication number: WO 2004/007987

(57) **Abstract**

In an electromagnetic brake (100) which includes a fixed iron core (22); a movable iron core (24) opposed to the fixed iron core (22) on one surface (42); and a coil (26) which moves the movable iron core (24) so that a distance between opposed surfaces (42, 44) opposed to each other of the fixed iron core (22) and the movable core (24) is changed, and in which braking is accomplished in association with movement of the movable iron core (24), the fixed iron core (22) and the movable iron core (24) each are provided with at least one concave portion (48, 50) in each of two surfaces (38, 40) sliding in an opposed manner when the movable iron core (24) moves.

## Description

### Technical Field

The present invention relates to an electromagnetic brake. More particularly, it relates to one suitably used as an electromagnetic brake for elevator provided in a traction machine for a traction type elevator.

### Background Art

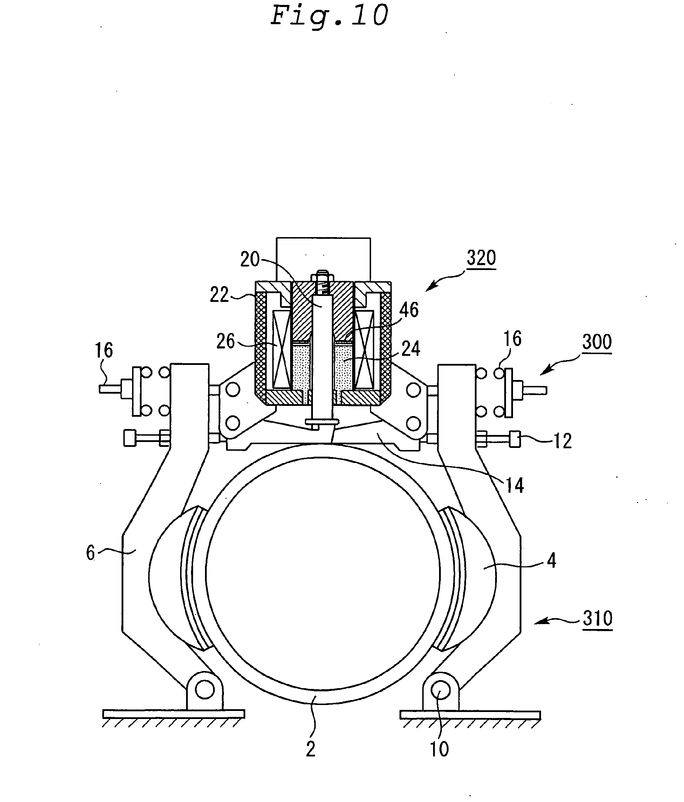

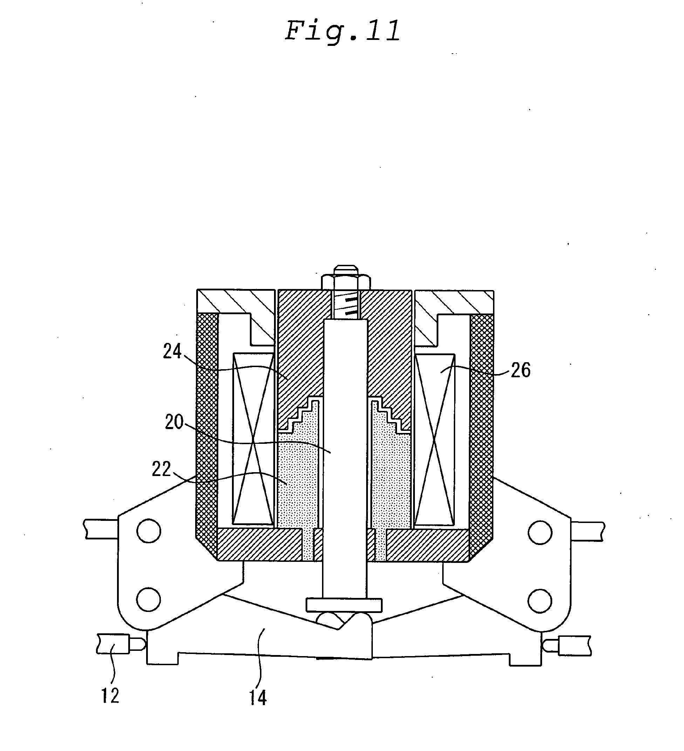

Figure 10 is a front view showing a conventional traction machine brake 300. Figure 11 is a sectional view showing one example of a plunger-type solenoid valve used in the conventional traction machine brake.

As shown in Figure 10, the traction machine brake 300 includes a brake mechanism 310 and a plunger-type solenoid valve 320.

The brake mechanism 310 has a brake drum 2 connected to a motor (not shown) for the traction machine brake 300. At two places on the outer peripheral wall of the brake drum 2, brake shoes 4 are provided so as to be opposed to each other. To the brake shoe 4 is connected a brake arm 6. The lower end of the brake arm 6 is fixed by an arm pin 10, and the upper part thereof is connected to a brake lever 14 by a pushing bolt 12. Further, a brake spring 16 is provided above the pushing bolt 12.

On the other hand, the plunger-type solenoid valve 320 has a rod 20. The lower part of the rod 20 is in contact with the brake lever 16. Around the lower part of the rod 20 is provided a fixed iron core 22, and around the upper part thereof is provided a plunger 24. In a space surrounded by the plunger 24 and the fixed iron core 22 is disposed a coil 26.

In the traction machine brake 300 constructed as described above, in a state in which a current to the coil 26 is shut off, the brake spring 16 pushes the brake arm 6 toward the brake drum 2, and the brake shoe 4 connected to the brake arm 6 is pressed on the brake arm 2 by this pushing force. In such a state, the rotation of the motor for the traction machine brake 300 is stopped. At this time, the brake lever 14 is pushed inward by the brake arm 6, and thereby the rod 20 is pushed up together with the plunger 24.

On the other hand, when a current flows through the coil 26 of the plunger-type solenoid valve 320, the plunger 24 is attracted to the fixed iron core 22 by the magnetic attraction force, and is pushed down together with the rod 20. The brake lever 14 is pushed down by the rod 20, and thereby the brake arm 6 is pushed in the direction such that the arm is opened. In this case, if the magnetic attraction force acting on the plunger 24 becomes stronger than the spring force of the brake spring 16, the braking force acting on the traction machine brake 200 is released, by which a rotatable state is established.

The traction machine brake 300 as described above is configured so that the brake lever 14 is moved in association with the pushing-down operation of the plunger-type solenoid valve to separate the brake arm 6 from the outer peripheral surface of brake drum, by which the braking force is released.

In the case of the brake constructed as described above, in order to solve the problem of shock and noise in collision caused when the plunger 24 is attracted to the fixed iron core 22, a shock absorbing material 46 such as a rubber sheet is held between the collision surfaces.

Furthermore, as shown in Figure 11, in some plunger-type solenoid valves, the tip end surface of the plunger 24 on which the magnetic attraction force acts and the opposed surface of the fixed iron core 22 that faces the tip end surface of the plunger 24 are formed into a stair shape to regulate the relationship between the plunger position and the attraction force.

However, if the collision surfaces are thus formed into a stair shape, the collision surfaces become complicated, so that it is difficult to hold the shock absorbing material between the collision surfaces. Also, since a gap must be provided to prevent the collision surfaces from coming into contact with each other, the surface on which the magnetic attraction force acts decreases, and hence the attraction force becomes weak.

### Disclosure of the Invention

The present invention has been made to solve the above problems, and accordingly an object thereof is to provide an electromagnetic brake which is small in size and in which a collision speed is low, operation noise is soft, and fatigue of a shock absorbing material reduces.

To achieve the above object, the present invention provides an electromagnetic brake which includes a fixed iron core; a movable iron core opposed to the fixed iron core on one surface; and a coil which moves the movable iron core so that a distance between opposed surfaces opposed to each other of the fixed iron core and the movable core is changed, and in which braking is accomplished in association with the movement of the movable iron core, characterized in that the fixed iron core and the movable iron core each are provided with at least one concave portion in each of two surfaces sliding in an opposed manner when the movable iron core moves.

According to this configuration, the speed of the movable iron core at the time of operation such as collision can be made low, and hence operation noise can be made soft, and the fatigue of the shock absorbing material can be decreased.

Also, in the electromagnetic brake in accordance with the present invention, in a state in which the distance between the opposed surfaces is the shortest, of the concave portion in the fixed iron core and the concave portion in the movable iron core, at least one set is arranged at a position opposed to each other in an aligned manner.

Also, in the electromagnetic brake in accordance with the present invention, the width of the concave portion is double or more a distance in a case where the distance between the opposed surfaces is the longest.

### Brief Description of the Drawings

Figure 1 is a front view for illustrating a traction machine brake in accordance with a first embodiment of the present invention;
Figure 2 is a sectional view for illustrating a plunger-type solenoidvalve in accordance with a first embodiment of the present invention;
Figure 3 is a schematic view for illustrating a state of operation of a conventional plunger-type solenoid valve;
Figure 4 is a schematic view for illustrating a state of operation of a plunger-type solenoid valve in accordance with a first embodiment of the present invention;
Figure 5 is a graph showing a movement waveform of a plunger of a conventional plunger-type solenoid valve, reaching from an excited state to an unexcited state;
Figure 6 is a graph showing a movement waveform of a plunger of a plunger-type solenoid valve in accordance with an embodiment of the present invention, reaching from an excited state to an unexcited state;
Figure 7 is a graph showing a movement waveform of a plunger of a conventional plunger-type solenoid valve, reaching from an unexcited state to an excited state;
Figure 8 is a graph showing a movement waveform of a plunger of a plunger-type solenoid valve in accordance with an embodiment of the present invention, reaching from an unexcited state to an excited state;
Figure 9 is a schematic view for illustrating a state of operation of a plunger-type solenoid valve in accordance with a second embodiment of the present invention;
Figure 10 is a front view showing a conventional traction machine brake; and
Figure 11 is a sectional view showing one example of a plunger-type solenoid valve used in the conventional traction machine brake.

### Best Mode for Carrying Out the Invention

Embodiments of the present invention will now be described with reference to the accompanying drawings. In the figures, the same reference numerals are applied to the same or equivalent elements, and explanation thereof is simplified or omitted.

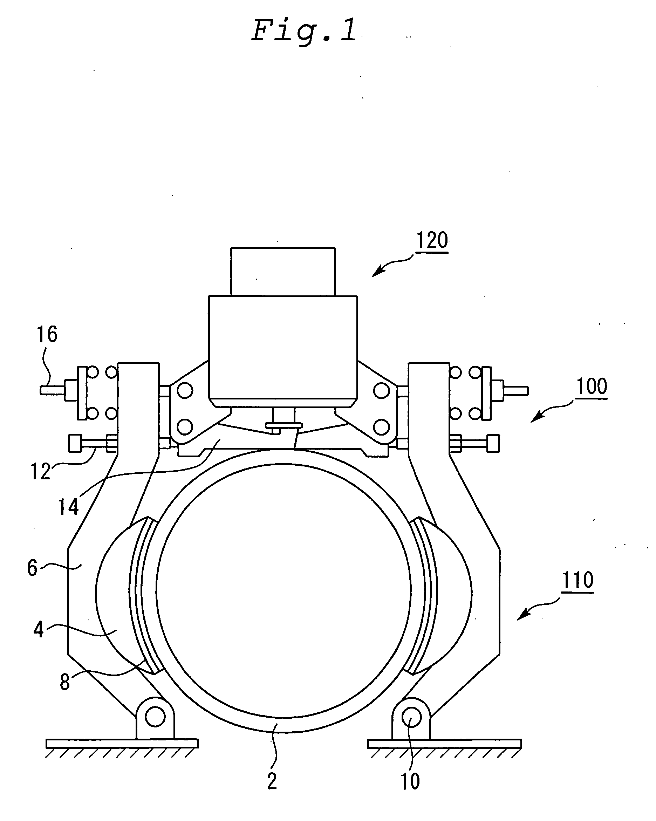

First, a first embodiment of the present invention will be described with reference to Figures 1 to 8.

Figure 1 is a front view for illustrating a traction machine brake 100 in accordance with a first embodiment of the present invention.

As shown in Figure 1, the traction machine brake 100 includes a brake mechanism 110 and a plunger-type solenoid valve 120.

The brake mechanism 110 consists mainly of a brake drum 2, brake shoes 4, and brake arms 6.

The brake drum 2 is installed to a motor shaft (not shown) for the traction machine brake 100. The brake drum 2 is a cylindrical body having a circular shape viewed from the front. The brake shoes 4 are provided at two places on the outer peripheral side surface of the brake drum 2 via a lining 8 so as to be opposed to each other. The brake arm 6 is disposed on the outside of each of the brake shoes 4.

The lower end portion of the brake arm 6 is rotatably fixed by an arm pin 10, and the upper end portion thereof is movably connected to a brake lever 14 by a pushing bolt 12. A brake spring 16 is provided above the pushing bolt 12 so that an elastic force acts in the direction such as to push the brake arm 6 inward.

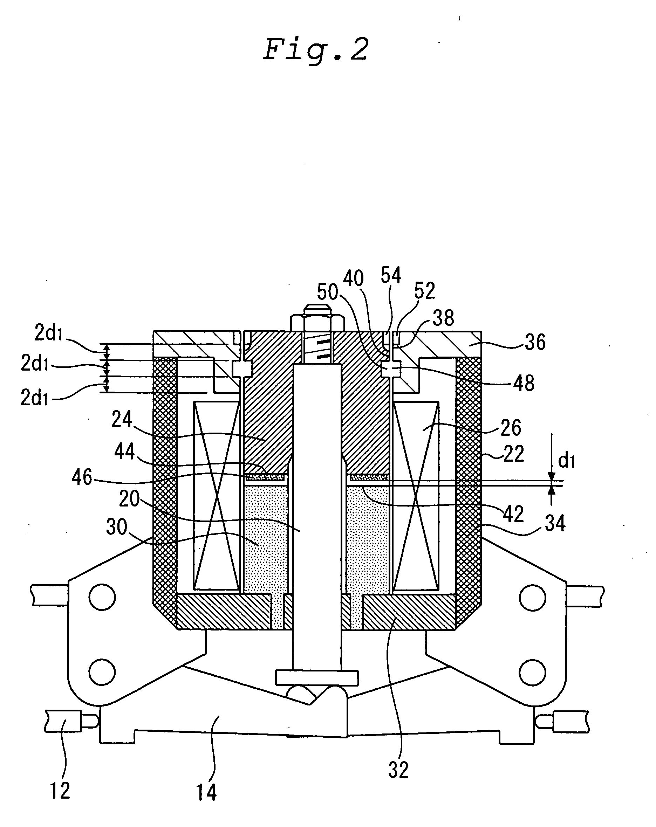

Figure 2 is a sectional view for illustrating the plunger-type solenoid valve 120.

As shown in Figure 2, the plunger-type solenoid valve 120 consists mainly of a rod 20, a fixed iron core 22, a plunger 24, and a coil 26.

The rod 20 is a shaft rod provided at the center of the plunger-type solenoid valve 120 in a state of being movable vertically. Around the rod 20, the fixed iron core 22 and the plunger 24 are provided with the rod 20 being the center.

The fixed iron core 22 consists mainly of an iron core central portion 30, an iron core lower surface portion 32, an iron core side surface portion 34, and an iron core upper surface portion 36. The iron core central portion 30 is provided so as to surround the lower part of the rod 20. The iron core lower surface portion 32 is disposed on the lower surface of the plunger-type solenoid valve 120 so as to be perpendicular to the iron core central portion 30 and to connect with the lower part of the iron core central portion 30. The iron core side surface portion 34 is disposed on the side surface of the plunger-type solenoid valve 120 so as to be perpendicular to the iron core lower surface portion 32 and to connect with the outer peripheral part of the iron core lower surface portion 32. Also, the iron core upper surface portion 36 is disposed on the upper surface of the plunger-type solenoid valve 120 so as to be perpendicular to the iron core side surface portion 34 and to connect with the upper part of the iron core side surface portion 34.

The plunger 24 is provided so as to connect with the outer periphery of the rod 20 with the upper part of the rod 20 being the center. An upper part 40 in the side surface portion of the plunger 24 faces a side surface 38 of the iron core upper surface portion 36 of the fixed iron core 22. Also, a lower surface 44 of the plunger 24, which is perpendicular to the rod 20, faces an upper surface 42 of the iron core central portion 30. Between these opposed surfaces, the plunger 24 is provided with a shock absorbing material 46.

In this description, the two surfaces 38 and 40 that are opposed to each other at the side are referred to as opposed side surfaces 38 and 40, and the two surfaces 42 and 44 that are opposed to each other vertically are referred to as collision surfaces 42 and 44.

The coil 26 is disposed so as to be surrounded by the iron core central portion 30, the iron core lower surface portion 32, the iron core side surface portion 34, the iron core upper surface portion 36, and the side surface portion of the plunger 24.

Specifically, the plunger-type solenoid valve 120 has a space, which is surrounded by the iron core central portion 30, the iron core lower surface portion 32, the iron core side surface portion 34, and the iron core upper surface portion 36 of the fixed iron core 22 and the plunger 24, with the rod 20 being the center, and the coil 26 is provided in this space.

The opposed side surfaces 38 and 40 are provided with concave portions 48 and 50, respectively. In an excited state in which a current flows through the coil 26 and the plunger 24 is attracted to and held by the fixed iron core 22, the concave portions 48 and 50 are arranged so that the openings thereof face each other in an aligned manner. In the upper end portions of the opposed side surfaces 38 and 40, bearings 52 and 54 are disposed, respectively.

When a difference in distance between an unexcited state in which the current to the coil 26 is shut off and the attraction is released and the excited state is taken as a stroke length d₁, the width of the opening of the concave portions 48, 50 can be expressed by 2d₁. In other words, the width of the concave portions 48, 50 is double the stroke length d₁. Furthermore, configuration is such that both of the distance from the lower end of the bearings 52, 54 to the upper end of the concave portions 48, 50 and the distance from the lower end of the concave portions 48, 50 to the lower end of the iron core upper surface portion 36 of the fixed iron core 22 are approximately 2d₁ or more, that is, double or more the stroke length.

Next, the operation of the plunger-type solenoid valve 120 constructed as described above and the operation of the traction machine brake 100 including the plunger-type solenoid valve 120 will be described with reference to Figures 1 and 2.

In this description, the state in which a current flows through the coil 26 and the plunger 24 is attracted to and held by the fixed iron core 22 is referred to as an excited state, and the state in which the current to the coil 26 is shut off and the attraction is released is referred to as an unexcited state.

As described above, in the excited state, the plunger 24 is close to the iron core central portion 30 of the fixed iron core 22 in a state in which the shock absorbing material 38 is held between the collision surfaces 42 and 44. In this state, the openings of the concave portions 48 and 50 face each other in an aligned manner.

At this time, the rod 20 provided in the center is in a state of being pushed down together with the plunger 24. Also, the brake lever 14 is pushed down by the rod 20, and a force applied by the pushed-down brake lever 14 is greater than a force that created by the brake spring pushing up the brake lever 14 via the brake arm 6. Therefore, in this state, the brake arm 6 is opened, and the brake shoe 4 is separated from the brake drum 2, so that the traction machine brake 100 is in a rotatable state.

On the other hand, in the unexcited state, no attraction force acts between the plunger 24 and the fixed iron core 22. Therefore, in this state, the brake lever 14 pushes up the rod 20 by means of a force created by the brake spring 16 pushing the brake arm 6, and accordingly the plunger 24 is in a pushed-up state. At this time, the distance between the collision surfaces 42 and 44 is the sum of the stroke length d₁ and the thickness of the shock absorbing material 46.

Also, in this state, since the plunger 24 is pushed up through the distance d₁ as compared with the excited state, the concave portion 50 is also shifted upward through the distance d₁. Therefore, the opposed openings of the concave portions 48 and 50 are shifted from each other through the distance d₁, that is, a half of the width of the concave portion. Herein, the depth of the concave portions 48, 50 is set so as to be sufficiently large as compared with the gap provided when portions without the concave portions 48 and 50 face each other.

Also, in this unexcited state, a force created by the brake spring 16 pushing the brake arm 6 is greater than a force applied by the rod 20 pushing down the brake lever 14. Therefore, the brake arm 6 is pushed inward, and accordingly the brake shoe 4 is pressed on the brake drum 2. Thereupon, in the unexcited state, the traction machine brake 100 is kept in a brake holding state, and is in a non-rotatable state.

The following will be an explanation of the situation of collision of the plunger 24 with the fixed iron core 22 when the electromagnetic brake constructed as described above is operated and stopped.

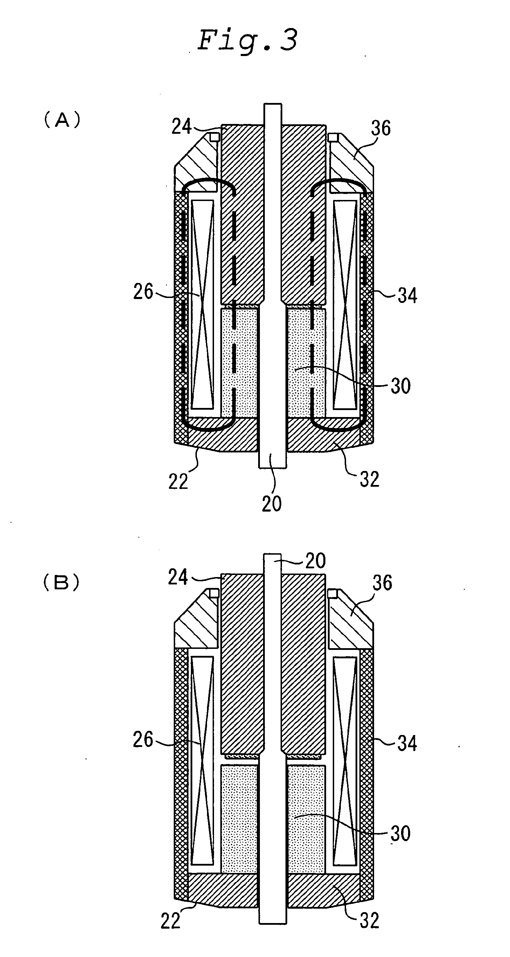

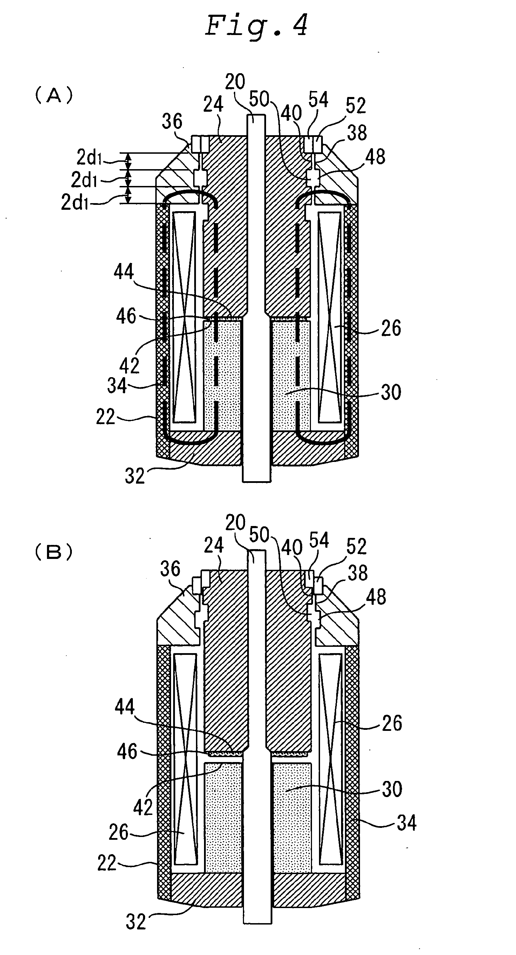

Figure 3 is a schematic view for illustrating a state of operation of a conventional plunger-type solenoid valve 310 for comparison, and Figure 4 is a schematic view for illustrating a state of operation of the plunger-type solenoid valve 120. Figures 3A and 4A show the excited state, and Figures 3B and 4B show the unexcited state.

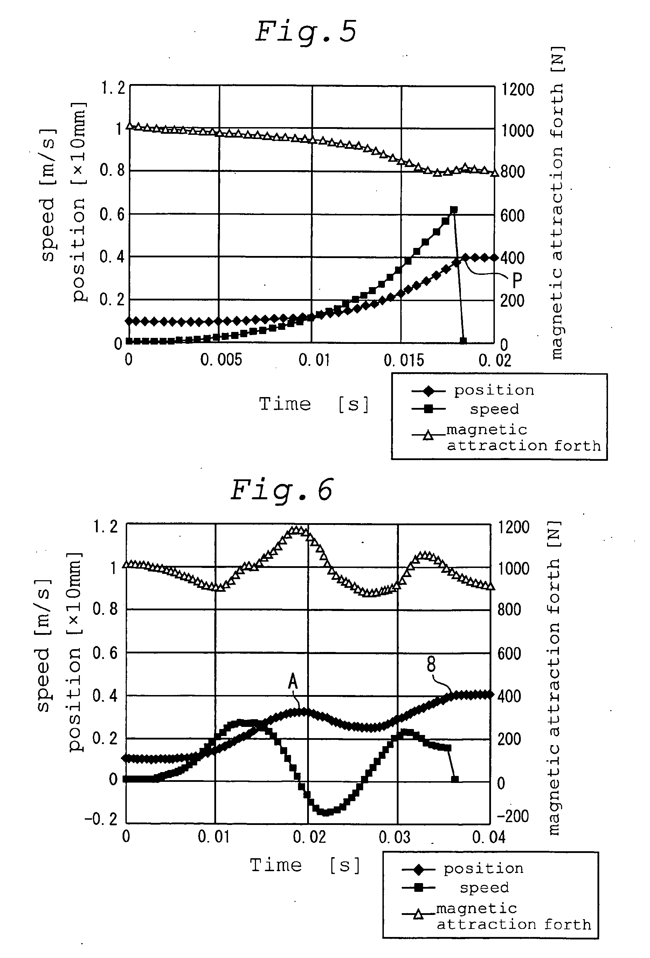

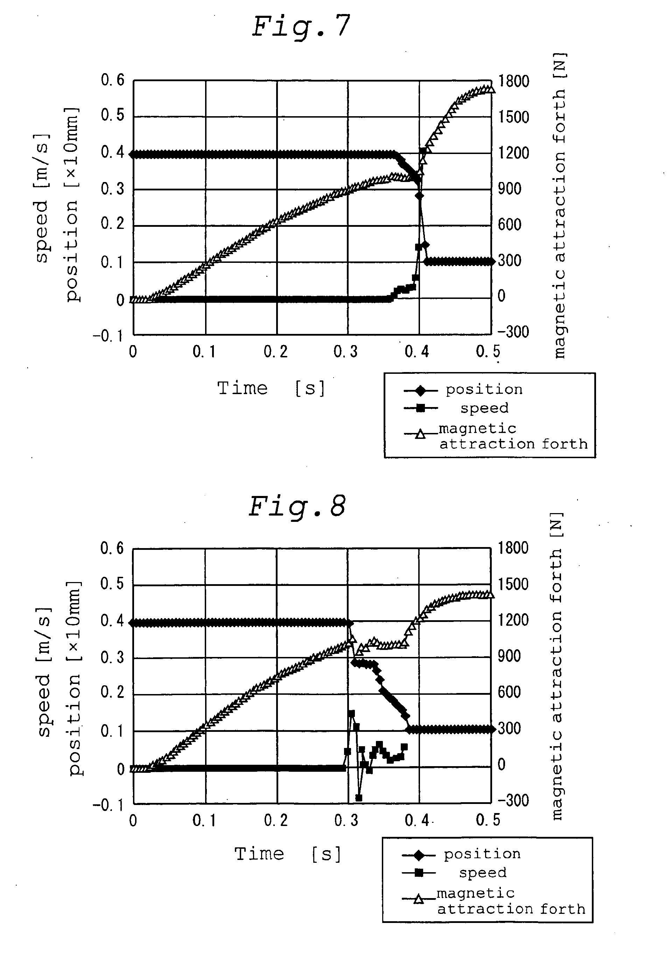

Figures 5 and 6 are graphs showing movement waveforms of the plunger 24, reaching from the excited state to the unexcited state in which the current is shut off to release the attraction of the plunger 24. Also, Figures 7 and 8 are graphs showing movement waveforms of the plunger 24, reaching from the unexcited state to the excited state in which a voltage is applied to attract and hold the plunger 24. Figures 5 and 7 show the case of the conventional plunger-type solenoid valve 320, and Figures 6 and 8 show the case of the plunger-type solenoid valve 120 in accordance with this embodiment.

In Figures 5 to 8, the abscissas represent elapsed time (S), and a curve plotted by ◆ indicates the position (mm) of the plunger 24, a curve plotted by ■ indicates a speed (m/s) of the plunger 24, and a curve plotted by Δ indicates a magnetic attraction force (N) applied to the plunger 24.

First, in the excited state shown in Figures 3A and 4A, the plunger 26 is attracted to and held by the fixed iron core 22 by the minimum exciting current. At this time, the plunger 24 is subjected to an upward force of 1000 N by the brake spring 16 via the rod 20.

As shown in Figures 5 and 6, in the initial excited state, that is, when the plunger 24 is attracted to the fixed iron core 22, the position of the plunger 24 is 1 (mm) for both of the conventional plunger-type solenoid valve 310 and the plunger-type solenoid valve 120 of this embodiment as indicated by ◆. From this state, if the current flowing through the coil 26 is shut off, the plunger 24 stops at a position at which the plunger 24 rises by 3 (mm), that is, at a position of 4 (mm).

Also, as indicated by ■ in Figure 5, for the conventional plunger-type solenoid valve 310, the speed of the plunger 24 increases gradually from the current shutoff, and the rising speed just before the rise stops becomes a maximum speed of 0.6 (m/s) at the position of 4 (mm), and thereafter the plunger 24 stops. At this time, as indicated by Δ, the magnetic attraction force decreases gradually from 1000 (N) to 800 (N).

On the other hand, for the plunger-type solenoid valve 120 of this embodiment, as shown in Figure 5, the magnetic attraction force once overcomes the spring force and exceeds 1000 N near point A at the position of 3 (mm) during the rising. Therefore, the plunger 24 is slightly pulled back in the reverse direction, and then starts rising again. When the plunger 24 comes to a point near the position of 3 (mm) again, it is going to be pulled back. However, at this point, since both of the speed and the current decrease, the magnetic attraction force is slightly greater than the spring force. Therefore, even if the plunger 24 somewhat decelerates, it collides with the fixed iron core 22. The collision speed at this time is about 0.15 (m/s).

Thereupon, comparing the conventional plunger-type solenoid valve 320 with the plunger-type solenoid valve 120 of this embodiment, the drop speed of the plunger-type solenoid valve 120 of this embodiment is about 1/4 that of the conventional one. For this reason, impact noise can be decreased, and also fatigue caused by a shock can be relieved.

For the plunger-type solenoid valve 120, the reason why the magnetic attraction force once overcomes the spring force at a point of the position of 3 (mm) is thought to be that the opposed side surfaces 38 and 40 are provided with the concave portions 48 and 50, respectively. In other words, when a current is carried, in the concave and convex portions, a magnetic attraction force acts so that the concave portion and the concave portion are pulled each other and the convex portion and the convex portion are pulled each other. This force is referred to as a reluctance force. Considering the time when the plunger 24 moves, on the opposed side surfaces 38 and 40 having concave and convex portions, a magnetic flux flows from the convex portion to the convex portion. If a shift of position between the convex portion and the convex portion occurs along with the movement of the plunger 24, the magnetic flux quickly becomes difficult to flow. For this reason, a speed electromotive force is generated in the coil 26 so that the amount of magnetic flux is kept constant, and hence the current increases. Therefore, when almost the same magnetic flux flows, a total magnetic attraction force is increased more by the reluctance force at a point of the position of 3 (mm) than at a point of the position of 1 (mm), so that it is thought that the magnetic attraction force overcomes the spring force.

When the influence of the speed electromotive force due to the movement of the plunger 24 is ignored, the current is diminished by the time constant of the coil 26 while flowing through a reflux circuit. Therefore, the plunger 24 is once decelerated by the subtraction of the spring force of the brake spring 16 and the magnetic attraction force, by which the speed electromotive force is decreased and the current is diminished. For this reason, the magnetic attraction force cannot overcome the spring force, so that the plunger 24 finally collides by means of the spring force while accelerating again. The collision speed of the plunger 24 is low because the plunger 24 decelerates once at a point of the position of 3 (mm).

On the other hand, as shown in Figures 7 and 8, the application of voltage from the unexcited state is started at a point of the position of 4 (mm) for both of the conventional plunger-type solenoid valve 320 and the plunger-type solenoid valve 120 in accordance with this embodiment.

As shown in Figure 7, for the conventional plunger-type solenoid valve 320, when the application of voltage is started, the plunger 24 is kept at almost the same position, and at the time when 0.35 (s) has elapsed and the attraction force exceeds 1000 (N), the plunger 24 begins to move and returns to a position of 1 (mm) immediately. The collision speed is 4 (m/s).

On the other hand, as shown in Figure 8, for the plunger-type solenoid valve 120 in accordance with this embodiment, when the application of voltage is started, the plunger 24 is kept at almost the same position, and at the time when 0.3 (s) has elapsed, the attraction force reaches 1000 (N). Therefore, at this point of time, the plunger 24 begins to move, and during the time of 0.1 second from 0.3 to 0.4(s), it moves relatively slowly and collides at the position of 1 (mm). The collision speed at this time is about 0.07 (m/s).

Thus, for the plunger-type solenoid valve 120, the time before attraction begins is short, and the attraction speed increases gradually. Therefore, the collision speed can be decreased. The reason for this is thought to be that the attraction start time for the plunger-type solenoid valve 120 in accordance with the present invention is earlier than that for the conventional plunger-type solenoid valve 320.

Although the case where the plunger-type solenoid valve 120 is used in the traction machine brake 100 has been described in the first embodiment, the present invention is not limited to the electromagnetic brake for tractionmachine as described above. The electromagnetic brake of the present invention can be used for other applications as a brake that functions in association with the operation of the plunger-type solenoid valve 120.

Also, in the present invention, the arrangement and shape of the element of the electromagnetic brake 120, such as the rod 20, the fixed iron core 22, the plunger 24, and the coil 26, are not limited to those explained in this embodiment.

Further, although the width of the concave portion 48, 50 is made double the stroke length, in the present invention, the width of the concave portions 48, 50 is not limited to this. The width of the concave portions 48, 50 has only to be large to a degree such that when the positional relationship between the opposed side surfaces 38 and 40 is shifted by the movement of the plunger 24, the opening portion of the concave portion 48, 50 is not closed completely by a portion that has no concave portions 48, 50.

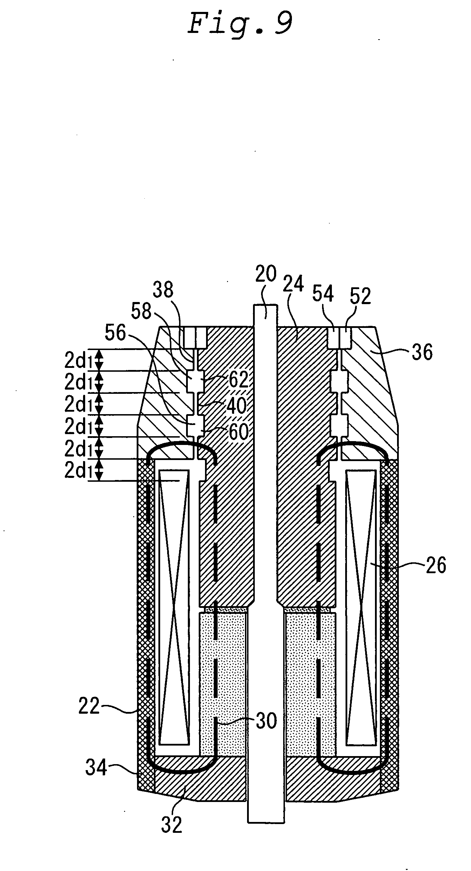

Next, a second embodiment of the present invention will be described with reference to Figure 9.

Figure 9 is a schematic view for illustrating a plunger-type solenoid valve 220 in accordance with the second embodiment.

The plunger-type solenoid valve 220 is similar to the plunger-type solenoid valve 120 explained in the first embodiment. However, as shown in Figure 9, the plunger-type solenoid valve 220 has two sets of concave portions 56 to 62 in the opposed side surfaces 38 and 40 of the iron core upper surface portion 36 and the plunger 24. Also, the plunger 24 has additional one concave portion 64 in a portion that is not opposed to the opposed side surface 40 under the opposed side surface 38. The concave portions 56 to 64 are configured by arranging two concave portions each having a width that is double the stroke length d₁ at an interval of 2d₁. The concave portions 56 and 58 in the iron core upper surface portion 36 and the concave portions 60 and 62 in the plunger 24 are arranged at positions such that these concave portions face each other in an aligned manner in the excited state. In the unexcited state, the openings of the concave portions 56, 60 and 58, 62 are shifted by 1/2 of the width.

Thus, by increasing the number of concave portions, the braking coefficient is increased, so that the collision speed and attraction speed can be regulated and decreased.

Although the case where the plunger-type solenoid valve 210 has two sets of concave portions 56 to 62 has been described in the second embodiment, the present invention is not limited to this case. Since the collision speed and attraction speed can be decreased by increasing the number of concave portions, a proper number of concave portions each having a proper depth has only to be provided considering the collision speed etc.

Also, the effect is controlled by the number of concave portions in this embodiment. However, the braking coefficient is increased to decrease the collision speed and attraction speed by increasing the width of concave portion or the depth thereof. Therefore, the collision speed and attraction speed may be controlled by adjusting the width or depth of concave portion.

As in the first embodiment, the plunger-type solenoid valve 220 described in the second embodiment can be used in the traction machine brake. The application of the plunger-type solenoid valve 220 is not limited to the hosting machine, and the plunger-type solenoid valve 220 can be used in other types of equipment as a brake.

The explanation of other elements is omitted because they are the same as the corresponding elements in the first embodiment.

In the present invention, a movable iron core corresponds to, for example, the plunger 24 in the first and second embodiments. Also, in the present invention, opposed surfaces correspond to the collision surfaces 42 and 44 in the first and second embodiments. Further, in the present invention, two surfaces sliding in an opposed manner mean two surfaces on which the positional relationship shifts along with the movement of the plunger, of two surfaces of the fixed iron core and the movable iron core that are in contact with each other or close to each other, and correspond to, for example, the opposed side surfaces 38 and 40 in the first and second embodiments.

Also, in the present invention, a state in which the distance between the opposed surfaces is the shortest corresponds to, for example, the excited state in the first and second embodiments, and a case where the distance between the opposed surfaces is the longest corresponds to, for example, the unexcited state in the first and second embodiments, and a distance at this time corresponds to the stroke length 2d₁.

### Industrial Application

As described above, according to the present invention, at least one concave portion is provided in each of two surfaces sliding in an opposed manner of the fixed iron core and the movable iron core. Therefore, the travel speed of the movable iron core can be made low, so that an electromagnetic brake in which shock and impact noise in collision are restrained can be obtained.

## Claims

1. An electromagnetic brake which comprises:
a fixed iron core;
a movable iron core opposed to said fixed iron core on one surface; and
a coil which moves said movable iron core so that a distance between opposed surfaces opposed to each other of said fixed iron core and said movable core is changed, and
in which braking is accomplished in association with the movement of said movable iron core,
**characterized in that** said fixed iron core and said movable iron core each are provided with at least one concave portion in each of two surfaces sliding in an opposed manner when said movable iron core moves.

2. The electromagnetic brake according to claim 1,
**characterized in that** in a state in which the distance between said opposed surfaces is the shortest, of the concave portion in said fixed iron core and the concave portion in said movable iron core, at least one set is arranged at a position opposed to each other in an aligned manner.

3. The electromagnetic brake according to claim 1 or 2,
**characterized in that** the width of said concave portion is double or more a distance in a case where the distance between said opposed surfaces is the longest.
